# FASCICULE DE BREVET EUROPEEN

(11) **EP 0 648 284 B1**
(45) Date de publication et mention de la délivrance du brevet: **29.01.1997**
(21) Numéro de dépôt: 93914831.8
(22) Date de dépôt: 08.07.1993
(51) Int. Cl.: C23C 18/12, B05D 1/26, C04B 41/45, C03C 17/00

(54) **PROCEDE DE FABRICATION DE COUCHES MINCES PRESENTANT DES PROPRIETES OPTIQUES**
VERFAHREN ZUR HERSTELLUNG VON DÜNNSCHICHTEN MIT OPTISCHEN EIGENSCHAFTEN
METHOD FOR PRODUCING THIN FILMS HAVING OPTICAL PROPERTIES

(30) Priorité: 09.07.1992 FR 9208524
(43) Date de publication de la demande: 19.04.1995
(73) Titulaire: COMMISSARIAT A L'ENERGIE ATOMIQUE, 75015 Paris Cédex 15 (FR)
(72) Inventeur: FLOCH, Hervé 4 ter, résidence "Les Cèdres", F-91800 Brunoy (FR); BELLEVILLE, Philippe, F-92400 Courbevoie (FR)
(74) Mandataire: Des Termes, Monique
(86) Numéro de dépôt international: FR9300707
(87) Numéro de publication internationale: WO9401598

(56) Documents cités:
- EP-A- 0 414 001
- DE-A- 3 939 501
- GB-A- 2 098 510
- US-A- 3 756 196

## Description

La présente invention concerne un procédé de fabrication de couches minces présentant des propriétés optiques.

Ce procédé permet de fabriquer des couches minces présentant par exemple des propriétés antireflet, hydrophobes ou de résistance à l'abrasion. Ces couches minces peuvent également présenter les propriétés d'un miroir diélectrique qui réfléchit une ou plusieurs longueurs d'onde spécifiques tout en présentant une absorption intrinsèque relativement faible.

Les couches minces concernent un substrat organique ou inorganique, (c'est-à-dire notamment les plastiques ou les substrats vitreux), revêtu d'un film présentant justement les propriétés optiques recherchées. Ces couches minces trouvent une multitude d'application, notamment dans les domaines suivants : les lasers de forte puissance, les applications solaires, thermiques et photovoltaïques, les systèmes optiques intégrés ou encore dans les applications architecturales comme les panneaux vitrés en extérieur. Dans le domaine des applications solaires, ces couches minces sont d'ores et déjà utilisées dans des systèmes optiques pour minimiser les pertes thermiques, concentrer et focaliser l'énergie lumineuse et enfin protéger certains éléments absorbants.

Le grand intérêt suscité par ces couches minces à propriétés optiques a entraîné la mise au point de divers procédés de fabrication.

Hormis les techniques classiques permettant de déposer des couches optiques sur divers substrats, à savoir, l'évaporation sous vide, le plasma réactif et les procédés de fluorination, qui sont coûteuses et entraînent des traitements thermiques à des températures élevées, on connaît d'après l'art antérieur, les techniques de chimie douce telles que les procédés de dépôt par voie sol-gel. Ce type de procédé permet l'élaboration de films disposés sur des substrats et présentant des propriétés optiques diverses, sans avoir recours à une étape thermique à des températures élevées.

Parmi les procédés de dépôt par voie sol-gel, l'une des techniques consiste à préparer des solutions traitantes de nature colloïdale et à les déposer sur un substrat. En d'autres termes, cette technique consiste à former une suspension stable et homogène de particules solides (colloïdes) dans un solvant liquide, cette suspension constituant ce que l'on appelle un "sol", puis à laisser évaporer ce solvant. Pour la réalisation de couches minces, le solvant utilisé, doit être suffisamment volatil pour s'évaporer facilement et laisser place à un dépôt de particules solides sur le substrat. Le sol préparé est généralement déposé sur le substrat par des techniques de trempage (connues sous le terme anglais de "dip-coating"), par enduction centrifuge ("spin-coating" en anglais), par épendage ("spray-coating" en anglais), par engobage ("slip-casting" en anglais) ou à l'aide d'un couteau horizontal ("tape-casting" en anglais).

Des exemples de réalisation de couches minces par voie sol-gel sont décrits, par exemple, dans la demande de brevet américain 7 148 458 (NTIS), correspondant aux brevets US 4,929,278 et US 4,966,812, ou dans les brevets US 2,432,483 et US 4,271,210.

Par ailleurs, des procédés de dépôt de ces couches colloidales sont également décrits. Ainsi, un article intitulé "Colloïdal Sol-Gel Optical Coatings" paru dans "The American Ceramic Society Bulletin", vol. 69, n° 7, pp. 1141-1143 (1990), décrit la possibilité de réaliser le dépôt de plusieurs couches de matières colloïdales par enduction centrifuge, afin de fabriquer les composants optiques d'un laser. Cet article précise qu'en utilisant les suspensions colloidales sol-gel et en choisissant judicieusement les solvants volatils constituant la phase liquide du milieu colloïdal, il est possible d'effectuer des traitements à température ambiante, sans chauffage excessif du substrat.

Le procédé de dépôt par enduction centrifuge présente toutefois un certain nombre d'inconvénients. En effet, la taille des substrats est limitée à des substrats de petites dimensions et les coins des substrats carré ou rectangulaire ne sont pas correctement revêtus d'une couche uniforme de la substance que l'on souhaite y déposer.

Les autres techniques de dépôt présentent également un certain nombre d'inconvénients.

La technique de trempage ("dip-coating") nécessite la préparation de grandes quantités de solution pour immerger le substrat à traiter. Ceci devient peu avantageux dans le cas de revêtements multicouches pour des optiques de grandes dimensions. Les techniques de dépôts classiques par évaporation sous vide (PVD, CVD) permettent de réaliser des dépôts de bonne qualité mais nécessitent pour cela une mise en oeuvre lourde et coûteuse (emploi d'une cloche à évaporation).

Par ailleurs, on connaît d'après la demande de brevet DE 39 39 501, un dispositif d'enduction laminaire permettant d'effectuer des dépôts de couches sur des substrats plans. Il est ainsi possible de réaliser des revêtements photographiques aussi bien qu'électroniques (écrans plats).

Enfin, on connaît également d'après le brevet US-4,370,356, un procédé de dépôt utilisant un cylindre creux rempli de la substance à déposer et que l'on déplace en translation par rapport à un substrat, de façon à déposer à la surface de celui-ci une couche mince de ladite substance. Ce procédé est plus particulièrement destiné au dépôt de résines photosensibles, de laques, de couches antireflet ou de polyimides.

La présente invention a pour objet de remédier aux inconvénients des techniques de réalisation de couches minces de l'art antérieur.

A cet effet, l'invention concerne un procédé de fabrication de couches minces présentant des propriétés optiques.

Selon les caractéristiques de l'invention, ce procédé comprend les étapes consistant à :
- préparer au moins une suspension colloïdale comprenant des colloïdes conférant lesdites propriétés optiques, dispersés dans un solvant, cette suspension colloïdale présentant une viscosité comprise entre 1 et 5 mPa.s,
- placer le substrat destiné à être recouvert de la couche mince sur un support,
- introduire ladite suspension colloïdale sous pression, à l'intérieur d'un cylindre d'enduction,
- déplacer ledit cylindre en translation et à vitesse constante, sous la surface à traiter du substrat, de façon que le ménisque de suspension colloïdale formé à la périphérie du cylindre d'enduction, assure le dépôt d'une couche mince de nature colloïdale sur la surface dudit substrat,
- déplacer également en translation et après le passage du cylindre d'enduction, un masque, parallèlement au plan de la surface du substrat,
- laisser sécher ledit substrat ainsi recouvert.

Ce procédé couvre un grand nombre d'applications dans le domaine des revêtements à propriétés optiques, tant par sa simplicité d'exécution (température et pressions ordinaires), que par son faible coût. Il permet notamment le dépôt de couches minces obtenues par la voie sol-gel colloïdale, c'est-à-dire le dépôt de suspensions colloïdales de très faible viscosité. Il permet également de procéder à l'enduction de substrats optiques plans ou à grand rayon de courbure, de nature diverse (minérale ou organique) ou de géométrie variée (angulaire ou circulaire).

En outre, ce procédé permet de travailler sur des grandes surfaces qui ne sont pas circulaires, alors que cette limitation est imposée par un procédé de traitement par centrifugation. De plus, ce procédé permet d'utiliser une très faible quantité de "sol" pour former la couche mince. Ceci entraîne un coût final très avantageux comparé aux techniques d'évaporation classiques et permet en outre d'éviter une pollution importante de l'environnement.

Enfin, l'utilisation d'un masque permet d'éviter que la surface du substrat à traiter soit directement en contact avec l'atmosphère ambiante une fois la couche mince déposée. La surface du substrat ou plutôt de la couche mince est donc protégée immédiatement après le dépôt et pendant quelques secondes après. Le séchage s'en trouve homogénéisé car les vapeurs de solvant sont suffisamment confinées entre le masque et le substrat. En outre, le dépôt effectué est propre, la vitesse de séchage est contrôlée et les turbulences d'air autour du dépôt sont évitées.

De façon avantageuse, la vitesse de déplacement du cylindre d'enduction est comprise entre environ 1 et 10 mm par seconde.

L'épaisseur de la couche mince obtenue étant directement proportionnelle à la vitesse d'enduction, cette gamme de vitesse permet d'obtenir le dépôt de couches colloïdales très minces.

De préférence, on utilise des moyens pour rompre le ménisque à la fin du dépôt de la couche mince sur le substrat.

Ceci permet de réaliser la finition du bord du substrat sans occasionner d'effets de surépaisseur importants.

Selon un mode de réalisation de l'invention, le procédé de fabrication est réalisé en utilisant alternativement une première suspension colloïdale comprenant des colloïdes choisis parmi l'oxyde de silicium, le fluorure de calcium ou le fluorure de magnésium et dispersés dans un solvant et une deuxième suspension colloïdale comprenant des colloïdes choisis parmi l'oxyde d'aluminium, l'oxyde de titane, l'oxyde de zirconium, l'oxyde d'hafnium, l'oxyde de thorium, l'oxyde de tantale, l'oxyde de niobium, l'oxyde d'yttrium, l'oxyde de scandium ou l'oxyde de lanthane et dispersés dans un solvant.

Il est ainsi possible de réaliser des miroirs diélectriques.

L'invention sera mieux comprise à la lecture de la description suivante d'un mode de réalisation préférentielle de l'invention donné à titre d'exemple illustratif et non limitatif, cette description étant faite en faisant référence aux dessins joints, dans lesquels :

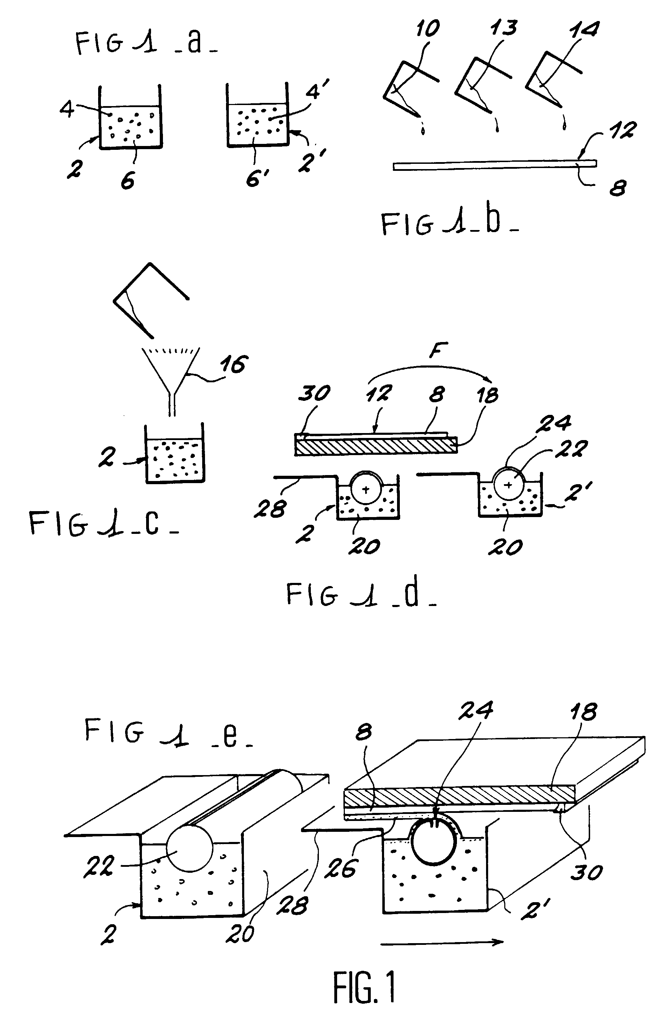

- les figures 1a à 1e illustrent respectivement les différentes étapes du procédé de fabrication des couches minces selon l'invention.

Comme illustré en figure la, le procédé selon l'invention consiste à préparer tout d'abord au moins une suspension colloïdale 2, éventuellement une seconde ou une troisième référencée 2', comprenant des colloïdes 4, 4' conférant les propriétés optiques recherchées, ces colloïdes étant dispersés dans un solvant 6, 6'. Certaines suspensions colloïdales 2, 2' préférées selon l'invention seront décrites ultérieurement. Ces suspensions colloïdales 2, 2' ont généralement une viscosité comprise entre 1 et 5 mPa.s.

Comme illustré en figure 1b, le substrat 8 sur lequel sera effectué le dépôt de la couche mince est tout d'abord soumis à un nettoyage méticuleux. Ce substrat peut être indifféremment de nature organique ou inorganique en fonction des applications envisagées. Une solution aqueuse détergente 10, contenant par exemple de l'eau désionisée et du Triton-X^{TM} 100, (marque déposée), est tout d'abord appliquée sur la surface 12 à traiter du substrat 8. Ensuite, on effectue un rinçage à l'aide, par exemple, d'eau désionisée 13, puis un deuxième nettoyage à l'éthanol 14, filtré à 0,2 micron.

Lorsque le substrat 8 est de nature inorganique, le nettoyage comprend en outre une étape supplémentaire, (non représentée sur la figure 1b) et consistant à exposer le substrat 8 sous rayonnement UV, en présence d'ozone. Il en résulte une hydrophilie accrue de la surface 12 du substrat et par conséquent une meilleure mouillabilité lors du dépôt.

Comme illustré en figure 1c, avant utilisation, chaque suspension colloïdale 2, 2' est filtrée sur une membrane 16 en fibre de verre ou en Téflon (marque déposée), fabriquée par E.I. Du Pont de Nemours et Co. Wilmington, DE, suivant le cas.

L'appareil de dépôt par enduction utilisé ici est illustré schématiquement aux figures 1d et 1e. Il est décrit plus en détail dans la demande de brevet DE 39 39501 évoquée précédemment. Cet appareil comprend un support 18 sur lequel est placé le substrat 8 et au moins un réservoir 20, (de préférence deux ou plus), destiné à recevoir les solutions colloïdales 2, 2' et pouvant se déplacer en translation le long du substrat 8, grâce à des mécanismes moteurs qui sont voisins de ceux décrits dans le document allemand précédemment évoqué. Chacun de ces réservoirs 20 comprend un cylindre d'enduction 22. Les mécanismes moteurs ont été améliorés de façon que le déplacement du cylindre d'enduction 22 s'effectue à une vitesse uniforme et sans secousses, pour obtenir le dépôt le plus homogène possible.

Après que les suspensions colloïdales 2, 2' aient été filtrées, on les introduit dans les circuits d'alimentation en fluide (non représentés) de l'appareil d'enduction laminaire, de façon à charger les réservoirs 20. Cette étape est illustrée en figure 1d. Les réservoirs 20 ont une capacité d'environ 0,4 l. Un système de pompage en continu assure la mise sous pression, la circulation et l'homogénéisation de la solution colloïdale 2, 2'. Les circuits sont suffisamment hermétiques pour limiter l'évaporation des solvants 6, 6' utilisés lors du traitement.

Ensuite, le substrat 8 à recouvrir est installé sur le support de traitement 18, de façon que sa race 12 à traiter soit dirigée vers le haut (voir figure 1d). Il est maintenu en contact avec ce support, par aspiration à l'aide d'une pompe à vide primaire, par exemple. L'ensemble support 18 et substrat 8 est ensuite retourné manuellement (flèche F), de façon à présenter la face 12 du substrat à l'envers, c'est-à-dire dirigée vers le bas par rapport à la figure 1d.

Le dépôt s'effectue alors de la façon décrite ci-après. Comme illustré en figure 1e, le cylindre d'enduction 22 est déplacé selon un mouvement de translation uniforme, à quelques dizièmes de millimètres sous la face à traiter 12 du substrat 8, l'axe longitudinal du cylindre 22 étant perpendiculaire au déplacement effectué. Un ménisque 24 de suspension colloïdale formé à la périphérie du cylindre d'enduction 22 et plus précisément le long d'une de ses génératrices, assure tout au long de son déplacement, la formation de la couche mince 26 sur la face 12 du substrat 8.

Le ménisque 24 peut être créé par un cylindre d'enduction 22 du type microporeux, présentant des tailles de pores de 10 microns ou du type présentant une fente longitudinale le long de l'une de ces génératrices.

La viscosité des solutions utilisées est généralement comprise entre 1 et 5 mPa.s. On notera que si la solution colloïdale était trop visqueuse, elle risquerait d'obturer les canaux d'alimentation de l'appareil d'enduction et si elle était trop fluide, elle risquerait de ne pas accrocher correctement sur le substrat 8.

En vue de contrôler l'évaporation du solvant 6, 6', lors du séchage de la couche mince 26, le réservoir 20 est muni d'un masque 28 formé d'une plaque s'étendant depuis l'un de ses rebords, horizontalement, parallèlement au support 18 et donc au substrat 8. Lorsque le cylindre 22 est déplacé en translation, le masque 28 l'est donc également. Les dimensions de ce masque 28 sont supérieures ou égales à celles du substrat 8 de façon à le recouvrir intégralement. Ce masque permet de confiner les vapeurs du solvant 6, 6' et de limiter les absences d'homogénéité de séchage. Ceci permet d'obtenir un dépôt d'épaisseur régulière et donc des propriétés optiques excellentes et uniformes. Le réglage de la distance entre le masque 28 et la surface 26 de la couche mince s'optimise selon les propriétés de volatilité des solvants 6, 6' utilisés, l'écoulement d'air autour de l'appareil d'enduction, la viscosité de la solution colloïdale 2, 2' ou sa concentration.

En outre, comme illustré en figures 1d et 1e, le support 18 du substrat 8 comprend un couteau 30 qui permet de rompre le ménisque 24 formé sur le cylindre 22 à la fin du déplacement dudit cylindre, afin d'éviter au niveau de la couche mince 26, l'apparition d'effets de bords importants.

La vitesse de translation du cylindre d'enduction 22 est contrôlée par l'application d'une tension précise aux bornes d'un moteur à courant continu, (non décrit et non représenté sur les figures 1d et 1e) mais illustré dans la demande de brevet DE 39 39501. En effet, il est impératif d'avoir une vitesse constante pour avoir un dépôt d'une épaisseur régulière. En outre, l'épaisseur de la couche obtenue est directement proportionnelle à la vitesse d'enduction. Dans le cas des suspensions colloïdales utilisées dans l'invention et décrites ultérieurement, la vitesse de translation du cylindre est typiquement de quelques millimètres par seconde et plus précisément d'environ 1 à 10 mm/s. Cette vitesse de translation du cylindre 22 correspond à un dépôt d'une couche mince 26, de quelques centaines de nanomètres d'épaisseur.

Enfin, l'homogénéité et la propreté du dépôt sont intimement liées à l'environnement immédiat de l'appareil d'enduction. Il est donc nécessaire d'utiliser une atmosphère de salle blanche (classe 100, norme US) afin de garantir les bonnes performances optiques des revêtements obtenus par le procédé selon l'invention. De façon avantageuse, on maintient autour de l'appareil d'enduction un flux d'air propre horizontal, en régime luminaire.

Après le séchage complet de la première couche mince 26, l'utilisation d'un second réservoir 20 rempli d'une solution colloïdale différente de la première permet l'élaboration de dépôts multicouches.

Grâce au procédé de fabrication selon l'invention, il est possible de réaliser des dépôts antireflet. On dépose alors dans ce cas, une solution colloïdale 2 formée par une suspension alcoolique de silice colloïdale (particules d'environ 200 Å de diamètre) dont la stabilité est garantie par un catalyseur (tel l'ammoniaque). La concentration en masse de silice est de l'ordre de quelques pourcents par rapport à la proportion en solvant. L'alcalinité du milieu se caractérise par un pH 10 et la viscosité par une valeur proche de 1 mPa.s. Pratiquement, le sol de silice 2 est obtenu par une hydrolyse d'un précurseur de type alcoxyde, comme par exemple le tétraéthylorthosilicate, en milieu alcoolique basique. L'alcool aliphatique couramment utilisé comme solvant est par exemple l'éthanol. Le substrat est de nature organique (plastique) ou minérale (verre).

Lorsque les substrats craignent les atmosphères humides comme les cristaux de KDP utilisés en conversion de fréquence par exemple, une couche de silicone est déposée préalablement à celle de silice. Le film de silicone dense est réalisé à partir de résines commerciales (Owens Illinois Inc.) qui sont des alkyl/arylalcoxy-siloxanes solubilisés dans un solvant alcoolique et convertis en réseau polymérique silicone par traitement thermique à 180°C environ pendant une dizaine d'heures.

Afin d'améliorer les caractéristiques de résistance à l'abrasion des dépôts antireflet, il est possible d'effectuer une exposition de la couche de silice colloïdale à une atmosphère alcaline (vapeurs ammoniacales, par exemple), pendant quelques heures. Ce traitement renforce suffisamment la cohésion des colloïdes entre eux et autorise un toucher précautionneux de la couche ainsi qu'un essuyage à l'aide d'un tissu imbibé d'alcool.

Grâce au procédé de fabrication selon l'invention, il est également possible, par exemple, de réaliser un matériau présentant simultanément des propriétés antireflet, hydrophobe et de résistance à l'abrasion. A cet effet, le procédé selon l'invention consiste alors, à déposer successivement sur un substrat 8 de nature organique ou inorganique, premièrement une couche de promoteur d'adhérence, puis une couche antireflet de nature colloïdale, ensuite une couche d'agent de couplage et enfin une couche anti-abrasive. La couche de promoteur d'adhérence est réalisée dans un matériau choisi parmi les silanes. La couche antireflet 2 est formée de colloïdes de silice 4 enrobés dans un liant de siloxanes. La couche d'agent de couplage est réalisée dans un matériau choisi parmi les silazanes et la couche anti-abrasive est réalisée à l'aide d'un polymère fluoré.

Grâce au procédé de fabrication selon l'invention, il est également possible de réaliser, par exemple, des miroirs diélectriques interférentiels comprenant un substrat recouvert d'un film diélectrique qui réfléchit sélectivement une ou plusieurs longueurs d'onde souhaitées. Ces miroirs diélectriques comprennent généralement une alternance d'une couche de suspension colloïdale d'un indice de réfraction donné et une deuxième couche de suspension colloïdale à indice de réfraction supérieur à celui de la première suspension.

Dans ce cas, on utilise comme substrat 8 un substrat de nature organique ou inorganique et en particulier siliceux, métallique ou encore céramique.

La première suspension colloïdale 2, comprend des colloïdes 4 choisis parmi l'oxyde de silicium, le fluorure de calcium ou le fluorure de magnésium et dispersé dans un solvant 6 choisi parmi les alcools aliphatiques saturés de formule ROH où R représente un alkyle ayant de 1 à 4 atomes de carbone.

La deuxième suspension colloïdale 2' dont l'indice de réfraction est supérieur à celui de la première suspension 2 comprend des colloïdes 4' choisis parmi l'oxyde d'aluminium, l'oxyde de titane, l'oxyde de zirconium, l'oxyde d'hafnium, l'oxyde de thorium, l'oxyde de tantale, l'oxyde de niobium, l'oxyde d'yttrium, l'oxyde de scandium ou l'oxyde de lanthane et dispersés dans un solvant 6' de même nature que celui qui vient d'être cité.

Les suspensions colloïdales 2, 2' utilisées sont issues de précurseurs ioniques (sels d'acide) purifiés par recristallisation ou de précurseurs moléculaires (alkoxydes) purifiés par distillation.

De préférence, ces sols sont fabriqués respectivement selon les méthodes de Stober (J. Colloïd Interface Sci., 26, pp. 62-69, 1968) pour SiO₂, de Thomas (Appli. Opt. 26, 4688, 1987) pour TiO₂, de Clearfield (Inorg. Chem., 3, 146, 1964) pour ZrO₂ et HfO₂, de O'Connor (brevet U.S. 3 256 204, 1966) pour ThO₂, de Yoldas (Am. Cer. Soc. Bull. 54, 289, 1975) pour AlOOH, de S. Parraud (MRS, Better Ceramics Through Chemistry, 1991) pour Ta₂O₅ et Nb₂O₅, et enfin de Thomas (Appl. Opt., 27, 3356, 1988) pour CaF₂ et MgF₂.

Les précurseurs ioniques sont choisis le plus souvent parmi les chlorures, les oxychlorures, les perchlorates, les nitrates, les oxynitrates ou encore les acétates.

Les précurseurs moléculaires sont de préférence choisis parmi les alkoxydes de formule molaire M(OR)ₙ, (M représentant un métal ou un élément du groupe III ou IV, OR un radical alkoxy de 1 à 6 atomes de carbone et n représentant la valence du métal). Dans les méthodes décrites précédemment, le précurseur est hydrolysé ou fluoré, puis polymérisé jusqu'à l'obtention d'un produit fini, insoluble dans le solvant choisi, nucléé et appelé suspension colloïdale.

Dans tous les exemples qui viennent d'être décrits, il est possible de traiter le substrat 8 recouvert d'au moins une couche mince 26 par des vapeurs alcalines, afin notamment d'améliorer les propriétés de tenue mécanique et de tenue du flux des couches ainsi déposées.

Grâce au procédé selon l'invention, on a pu réaliser un certain nombre de substrats recouverts de couches minces différentes. Les exemples pratiques de réalisation sont illustrés ci-après.

### Exemple 1

Le substrat 8 utilisé est un substrat en verre (glace blanche B270) de surface 200x200 mm² et d'épaisseur 6 mm. La qualité du polissage est de 3λ (λ=1,06 micron) et l'indice de réfraction est de 1,52 a une longueur d'onde de 600 nm. Ce substrat 8 est nettoyé selon la procédure suivante : nettoyage de la surface avec une solution d'acide fluorhydrique diluée à 1% en volume, puis rinçage abondant à l'eau pure désionisée, nettoyage à l'aide d'une solution détergente de savon végétal (Green Soap ; Eli Lilly & Co) ;rinçage à l'eau pure, puis à l'alcool éthylique filtré à 0,2 micron.
**1)** on a préparé une suspension colloïdale 2 en mélangeant 1046,3 g d'éthanol absolu avec 136,7 g de tétraéthylorthosilicate distillé (167°C, 10⁵Pa). Le mélange est homogénéisé par agitation pendant 5 minutes. En maintenant cette agitation, on additionne alors 36,3 g d'ammoniaque à 28% minimum. La réaction d'hydrolyse nécessite un minimum de 48 h à 25°C pour être complète. Il survient alors une opalescence qui témoigne de la formation de colloïdes de silice. La mesure granulométrique effectuée révèle un diamètre moyen des colloïdes de 21 ± 9 nm. Le pH final de ce sol est d'environ 10,5 et la concentration massique en SiO₂ est de 3,2%. Avant utilisation le sol de silice est filtré à 0,2 micron.
**2)** On remplit le premier circuit de dépôt de l'appareil d'enduction avec environ 400 cm³ du sol de silice 2. Les paramètres de dépôt sont ajustés comme suit, vitesse de translation : 5 mm/seconde, distance masque 28/substrat 8 : 4 mm, temps de séchage : 2 minutes.

Le substrat 8 ainsi traité révèle par spectrophotométrie les facteurs de transmission suivants :
T = 95,8% à 1100 nm (maximum),
T = 95,6% à 1200 nm
T = 95,4% à 1000 nm.

Ces mesures sont précises à ±0,3% en transmission et sont représentatives de l'ensemble de la surface traitée antireflet.

L'indice de réfraction de la couche de SiO₂ est dans ces conditions de dépôt de 1,22 à 1060 nm ; ce qui correspond à une porosité de l'ordre de 50%.

### Exemple 2

Le substrat 8 utilisé est un substrat en verre (glace blanche B270) de surface 200x200 mm² et d'épaisseur 6 mm. Le polissage est de qualité 3λ (λ=1,06 micron) et l'indice de réfraction est de 1,52 pour une longueur d'onde de 600 nm. La procédure de nettoyage du substrat 8 est la suivante : nettoyage de la surface avec une solution d'acide fluorhydrique diluée à 1% en volume puis rinçage à l'eau pure désionisée, nettoyage à l'aide d'une solution détergente de savon végétal (Green Soap), rinçage à l'eau pure désionisée puis à l'alcool éthylique filtré à 0,2 micron.
**1)** On a préparé une suspension colloïdale 2 comme dans l'exemple 1.
**2)** On remplit le premier circuit de dépôt de l'appareil d'enduction avec environ 400 cm³ du sol de silice 2. On effectue un dépôt sur le substrat 8 selon la procédure suivante, vitesse de translation : 6,5 mm/seconde, distance masque 28/substrat 8 : 4 mm, temps de séchage : 2 minutes.
**3)** Le substrat 8 ainsi traité est alors mise en confinement ammoniacal dans une enceinte close (de volume 5 dm³) contenant environ 500 cm³ d'ammoniaque à 28% minimum dans son fond. Le substrat est maintenu en présence de ces vapeurs alcalines pendant un minimum de 10h afin de présenter des qualités de résistance à l'abrasion.
**4)** On procède alors au traitement antireflet de l'autre face du substrat selon les mêmes paramètres de dépôt qu'en 2).
**5)** Le substrat traité sur les deux faces est mis à nouveau en confinement ammoniacal selon le procédé décrit au paragraphe 3.

Les propriétés apportées par l'ensemble de ce traitement sont :
- des valeurs de transmission optique qui atteignent 99,8% à 1100 nm, 99,5% à 1200 nm et 99,4% à 1000 nm. Ces valeurs sont précises à ±0,3% en transmission et sont représentatives de l'ensemble de la surface traitée.
- une résistance à l'abrasion des couches déposées qui autorise des essuyages de la surface avec un papier buvard imbibé d'alcool (essuyage connu sous le terme anglais d'essuyage type "Drag wipe").
- des valeurs de tenue au flux laser qui dépasse 18J/cm² avec une durée d'impulsion de 3 ns, à une longueur d'onde de l'ordre de 1064 nm et qui excède 45J/cm², avec une durée d'impulsion de 8 ns et à une longueur d'onde de l'ordre de 1064 nm.

### Exemple 3

Le substrat 8 utilisé est identique à celui de l'exemple 1 et a été préparé de la même façon.
**1)** On prépare une suspension colloïdale 2 de façon identique à celle décrite dans les exemples 1 et 2.
**2)** On prépare en outre une suspension colloïdale 2' en hydrolysant vigoureusement 246g de sec-butoxyde d'aluminium (1 mole) dans 3000g d'eau désionisée (166 moles à 65°C). On obtient alors un précipité blanchâtre volumineux d'oxyde d'aluminium hydraté. On extrait alors l'isobutanol par distillation à 98°C à la pression atmosphérique (10⁵Pa) et on porte l'ensemble à reflux à 100°C. On peptise alors le précipité par ajout de 7,0g d'acide chlorhydrique concentré (0,07 mole) et on maintient l'ensemble sous reflux total pendant 15 heures environ. On obtient alors un sol colloïdal finement divisé d'aspect opalescent contenant des particules d'alumine hydratée (type boehmite) de morphologie parallélépipédique (40 nmx20 nmx50 nm). La répartition de ces particules est monodispersée. Ce sol d'alumine hydratée est concentré sous vide jusqu'à atteindre 12% en Al₂O₃ (425g). On obtient alors un produit sous forme d'une pâte gélatineuse que l'on peut aisément redisperser sous ultrasons dans des alcools aliphatiques légers. Typiquement, on refluidifie ce sol par dilution à 3,5% en Al₂O₃ dans du méthanol pur. Le pH du sol est ramené de 3,5 à pH 5,5 par ajout d'oxyde de propylène (epoxy 1-2 propane) qui neutralise l'excès d'acide chlorhydrique, sans perdre la stabilité colloïdale. La proportion d'oxyde de propylène rajoutée correspond à un rapport molaire (oxyde de propylène/HCl) de 1 dans le mélange, et l'équilibre en pH n'est atteint qu'après plusieurs jours d'agitation. Avant utilisation, ce sol est dilué à 2,5% avec du méthanol et filtré sur un tamis en fibre de verre.
**3)** On remplit les deux circuits de dépôt de l'appareil d'enduction laminaire avec respectivement 400 cm³ du sol 2, et 400 cm³ du sol 2'. On procède ensuite au dépôt de la couche de silice (sol 2) selon les paramètres suivants ; vitesse de translation : 5 mm/seconde, distance masque 28/substrat 8 : 4 mm, temps de séchage : 2 minutes. Sur ce dépôt de SiO₂, on réalise ensuite le dépôt d'une couche d'alumine hydratée (sol 2') selon les paramètres suivants ; vitesse de translation : 7 mm/s, distance masque 28/substrat 8 : 4 mm, temps de séchage : 2 minutes. On répète cette procédure de dépôts alternés jusqu'à l'obtention d'un miroir présentant 34 couches au total, c'est-à-dire 17 couches de SiO₂ alternées avec 17 couches d'Al₂O₃.H₂O. Afin de limiter les contraintes d'un tel empilement, on procède à une immersion du substrat dans des vapeurs d'ammoniac pendant dix minutes après le dépôt de chaque couche de SiO₂. Les réponses spectrales en réflexion sous incidence normale (0°) sont de 98,9% ±0,5% à une longueur d'onde de 1060 nm et de 98,1% ±0,7% à 350 nm. Dans ce miroir diélectrique exempt de craquelures ou d'effets de bord prononcés, les monocouches de SiO₂ et d'Al₂O₃.H₂O ont des indices de réfraction respectifs de 1,22 et 1,43 à 1060 nm, c'est-à-dire correspondant à des porosités respectives de 50% et 35%.

Globalement, les couches minces optiques réalisées répondent à de bons critères de qualité en matière de propriétés optiques (transmission et réflexion), en matière d'uniformité et de planéité du dépôt et en matière de résistance mécanique et de tenue au flux laser.

## Revendications

1. Procédé de fabrication de couches minces (26) présentant des propriétés optiques, caractérisé en ce qu'il comprend les étapes consistant à :
- préparer au moins une suspension colloïdale (2, 2') comprenant des colloïdes (4, 4') conférant lesdites propriétés optiques, dispersés dans un solvant (6, 6'), cette suspension colloïdale présentant une viscosité comprise entre 1 et 5 mPa.s,
- placer le substrat (8) destiné à être recouvert de la couche mince sur un support (18),
- introduire ladite suspension colloïdale (2, 2') sous pression, à l'intérieur d'un cylindre d'enduction (22),
- déplacer ledit cylindre (22) en translation et à vitesse constante, sous la surface (12) à traiter du substrat (8), de façon que le ménisque (24) de suspension colloïdale (2, 2') formé à la périphérie du cylindre d'enduction (22), assure le dépôt d'une couche mince (26) de nature colloïdale sur la surface (12) dudit substrat (8),
- déplacer également en translation et après le passage du cylindre d'enduction (22), un masque (28), parallèlement au plan de la surface (12) du substrat (8),
- laisser sécher ledit substrat (8) ainsi recouvert.

2. Procédé de fabrication selon la revendication 1, caractérisé en ce que la vitesse de déplacement du cylindre d'enduction (22) est comprise entre environ 1 et 10 mm par seconde.

3. Procédé de fabrication selon la revendication 1 ou 2, caractérisé en ce que le cylindre d'enduction (22) est muni d'une fente longitudinale prévue le long de l'une de ces génératrices.

4. Procédé de fabrication selon la revendication 1, caractérisé en ce que le cylindre d'enduction (22) est un cylindre microporeux.

5. Procédé de fabrication selon la revendication 1, caractérisé en ce qu'on utilise des moyens (30) pour rompre le ménisque (24), à la fin du dépôt de la couche mince (26) sur le substrat (8).

6. Procédé de fabrication selon la revendication 1, caractérisé en ce qu'avant d'effectuer le dépôt de la suspension colloïdale (2, 2'), on nettoie le substrat (8) à l'aide d'une solution aqueuse détergente et d'une solution d'éthanol.

7. Procédé de fabrication selon la revendication 6, caractérisé en ce que le substrat (8) est inorganique et en ce qu'après l'étape de nettoyage, le substrat (8) est soumis à un traitement aux rayonnements ultraviolets, en présence d'ozone.

8. Procédé de fabrication selon l'une quelconque des revendications précédentes, caractérisé en ce qu'il consiste à déposer une suspension colloïdale (2) comprenant des colloïdes d'oxyde de silicium dispersés dans un alcool aliphatique.

9. Procédé de fabrication selon la revendication 8, caractérisé en ce que l'on dépose sur le substrat (8), une couche de silicone, avant d'effectuer le dépôt de la couche mince (26) d'oxyde de silicium.

10. Procédé de fabrication selon l'une quelconque des revendications 1 à 7, caractérisé en ce qu'il consiste à déposer alternativement une première suspension colloïdale (2) comprenant des colloïdes (4) choisis parmi l'oxyde de silicium, le fluorure de calcium ou le fluorure de magnésium et dispersés dans un solvant (6) et une deuxième suspension colloïdale (2') comprenant des colloïdes (4') choisis parmi l'oxyde d'aluminium, l'oxyde de titane, l'oxyde de zirconium, l'oxyde d'hafnium, l'oxyde thorium, l'oxyde de tantale, l'oxyde de niobium, l'oxyde d'yttrium, l'oxyde de scandium ou l'oxyde de lanthane et dispersés dans un solvant (6').

11. Procédé de fabrication selon la revendication 10, caractérisé en ce que le solvant (6, 6') est choisi parmi les alcools aliphatiques saturés de formule ROH où R représente un alkyle ayant de 1 à 4 atomes de carbone.

12. Procédé de fabrication selon l'une quelconque des revendications 1 à 7, caractérisé en ce qu'il consiste à introduire à l'intérieur d'un cylindre d'enduction (22) puis à déposer successivement grâce à ce cylindre,
- une couche de promoteur d'adhérence réalisée dans un matériau choisi parmi les silanes,
- une couche antireflet formée de colloïdes de silice enrobés d'un liant siloxane,
- une couche d'agent de couplage réalisée dans un matériau choisi parmi les silazanes, et
- une couche anti-abrasive d'un polymère fluoré.

13. Procédé de fabrication selon l'une quelconque des revendications 8 à 12, caractérisé en ce que les couches déposées sont traitées par des vapeurs alcalines.

## Patentansprüche

1. Verfahren zur Herstellung von Dünnschichten mit optischen Eigenschaften,
**dadurch gekennzeichnet**, daß es die folgenden Schritte umfaßt:
- Zubereiten von wenigstens einer Kolloidsuspension (2, 2'), Kolloide (4, 4') enthaltend, die die besagten optischen Eigenschaften verleihen, dispergiert in einem Lösungsmittel (6, 6'), wobei diese Kolloidsuspension eine zwischen 1 und 5 mPa.s enthaltene Viskosität aufweist,
- Anordnen des Substrats (8), das mit der Dünnschicht überzogen werden soll, auf einem Träger (18),
- Einfüllen der Kolloidsuspension (2, 2') unter Druck ins Innere eines Beschichtungszylinders (22),
- Parallelverschieben des Zylinders (22) mit konstanter Geschwindigkeit unter der zu behandelnden Oberfläche (12) des Substrats (8), so daß der Meniskus (24) der Kolloidsuspension (2. 2'), ausgebildet an der Peripherie des Beschichtungszylinders (22), das Auftragen einer Dünnschicht (26) von kolloidaler Beschaffenheit auf der Oberfläche (12) des Substrats (8) bewirkt,
- Verschieben, ebenfalls parallel und nach dem Durchgang des Beschichtungszylinders (22), einer Maske (28) parallel zur Ebene der Oberfläche (12) des Substrats (8),
- Trocknenlassen des so beschichteten Substrats (8).

2. Herstellungsverfahren nach Anspruch 1, dadurch gekennzeichnet, daß die Verschiebungsgeschwindigkeit des Beschichtungszylinders (22) enthalten ist zwischen 1 und 10 mm pro Sekunde.

3. Herstellungsverfahren nach Anspruch 1 oder 2, dadurch gekennzeichnet, daß der Beschichtungszylinder (22) längs einer seiner Mantellinien einen Längsschlitz aufweist.

4. Herstellungsverfahren nach Anspruch 1, dadurch gekennzeichnet, daß der Beschichtungszylinder (22) ein mikroporöser Zylinder ist.

5. Herstellungsverfahren nach Anspruch 1, dadurch gekennzeichnet, daß man Einrichtungen benutzt, um am Ende des Auftragens der Dünnschicht (26) auf das Substrat (8) den Meniskus (24) zu brechen.

6. Herstellungsverfahren nach Anspruch 1, dadurch gekennzeichnet, daß man vor Beginn des Auftragens der Kolloidsuspension (2, 2') das Substrat (8) mit Hilfe einer wäßrigen Waschlösung und einer Ethanollösung reinigt.

7. Herstellungsverfahren nach Anspruch 6, dadurch gekennzeichnet, daß das Substrat (8) anorganisch ist, und daß das Substrat (8) nach dem Reinigungsschritt einer UV-Strahlenbehandlung unterzogen wird, in Anwesenheit von Ozon.

8. Herstellungsverfahren nach einem der vorangehenden Ansprüche, dadurch gekennzeichnet, daß es darin besteht, eine Kolloidsuspension (2) aufzutragen, die in einem alipathischen Alkohol dispergierte Siliciumoxidkolloide enthält.

9. Herstellungsverfahren nach Anspruch 8, dadurch gekennzeichnet, daß man auf dem Substrat (8) eine Siliconschicht abscheidet, vor dem Auftragen der Dünnschicht (26) aus Siliciumoxid.

10. Herstellungsverfahren nach einem der Ansprüche 1 bis 7, dadurch gekennzeichnet, daß es darin besteht, abwechselnd eine erste, unter Siliciumoxid, Calciumfluorid oder Magnesiumfluorid ausgewählte Kolloide enthaltende und in einem Lösungsmittel (6) dispergierte Kolliodsuspension (2) und eine zweite, unter Aluminiumoxid, Titanoxid, Zirkoniumoxid, Hafniumoxid, Thoriumoxid, Tantaloxid, Niobiumoxid, Yttriumoxid, Scandiumoxid oder Lanthanoxid ausgewählte Kolloide enthaltende und in einem Lösungsmittel (6') dispergierte Kolloidsuspension (2') aufzutragen.

11. Herstellungsverfahren nach Anspruch 10, dadurch gekennzeichnet, daß das Lösungsmittel (6, 6') ausgewählt wird unter dem gesättigten alipathischen Alkoholen der Formel ROH, wo R ein Alkyl mit 1 bis 4 Kohlenstoffatomen darstellt.

12. Herstellungsverfahren nach einem der Ansprüche 1 bis 7, dadurch gekennzeichnet, daß es darin besteht, ins Innere eines Beschichtungszylinders (22) einzufüllen, sodann mittels dieses Zylinders nacheinander aufzutragen:
- eine die Haftung fördernde Schicht, hergestellt aus einem unter den Silanen ausgewählten Material,
- eine Antireflexschicht, gebildet durch Siliciumdioxidkolloide, umhüllt von einem Siloxanbindemittel,
- eine Kopplungsmittelschicht, hergestellt aus einem unter den Silazanen ausgewählten Material, und
- eine Antiabrasionsschicht aus einen fluorierten Polymer.

13. Herstellungsverfahren nach einem der Ansprüche 8 bis 12, dadurch gekennzeichnet, daß die aufgebrachten Schichten mit alkalischen Dämpfen behandelt werden.

## Claims

1. Process for the production of thin films (26) having optical properties, characterized in that it consists of the following stages:
- preparing at least one colloidal suspension (2, 2') comprising colloids (4, 4') giving said optical properties, dispersed in a solvent (6, 6'), said colloidal suspension having a viscosity between 1 and 5 mPa·s,
- placing the substrate (8) to be covered with the thin film on a support (18),
- introducing said colloidal suspension (2, 2') under pressure into a coating cylinder (22),
- displacing said cylinder (22) in translation and at constant speed below the surface (12) to be treated of the substrate (8), so that the meniscus (24) of the colloidal suspension (2, 2') formed on the periphery of the coating cylinder (22) ensures the deposition of a thin film (26) of a colloidal nature on the surface (12) of said substrate (8),
- also displacing in translation and following the passage of the coating cylinder (22), a mask (28), parallel to the plane of the surface (12) of the substrate (8),
- allowing the thus covered substrate (8) to dry.

2. Production process according to claim 1, characterized in that the displacement speed of the coating cylinder (22) is between approximately 1 and 10 mm per second.

3. Production process according to claim 1 or 2, characterized in that the coating cylinder (22) is provided with a longitudinal slit along one of its generatrixes.

4. Production process according to claim 1, characterized in that the coating cylinder (22) is a microporous cylinder.

5. Production process according to claim 1, characterized in that use is made of means (30) for breaking the meniscus (24) at the end of the deposition of the thin film (26) on the substrate (8).

6. Production process according to claim 1, characterized in that prior to depositing the colloidal suspension (2, 2'), the substrate (8) is cleaned with the aid of an aqueous detergent solution or an ethanol solution.

7. Production process according to claim 6, characterized in that the substrate (8) is inorganic and in that following the cleaning stage, the substrate (8) is exposed to an ultraviolet ray treatment in the presence of ozone.

8. Production process according to any one of the preceding claims, characterized in that it consists of depositing a colloidal suspension (2) incorporating colloids of silicon oxide dispersed in an aliphatic alcohol.

9. Production process according to claim 8, characterized in that on the substrate (8) is deposited a silicone coating before making the deposit of the thin film (26) of silicon oxide.

10. Production process according to any one of the claims 1 to 7, characterized in that it consists of alternatively depositing a first colloidal suspension (2) comprising colloids (4) chosen from among silicon oxide, calcium fluoride or magnesium fluoride and dispersed in a solvent (6) and a second colloidal suspension (2') comprising colloids (4') chosen from among aluminium oxide, titanium oxide, zirconium oxide, hafnium oxide, thorium oxide, tantalum oxide, niobium oxide, yttrium oxide, scandium oxide or lanthanum oxide and dispersed in a solvent (6').

11. Production process according to claim 10, characterized in that the solvent (6, 6') is chosen from among saturated aliphatic alcohols of formula ROH, in which R represents an alkyl having 1 to 4 carbon atoms.

12. Production process according to any one of the claims 1 to 7, characterized in that it consists of introducing into a coating cylinder (22) and then successively depositing by means of said cylinder an adhesion promoting coating formed from a material chosen from among silanes, an antireflection coating formed from silica colloids coated with a siloxane binder, a coupling agent coating formed from a material chosen from among silazanes and an anti-abrasive coating of a fluorine polymer.

13. Production process according to any one of the claims 8 to 12, characterized in that the deposited films are treated by alkaline vapours.
